# EUROPÄISCHE PATENTSCHRIFT

(11) **EP 0 670 249 B1**
(45) Veröffentlichungstag und Bekanntmachung des Hinweises auf die Patenterteilung: **02.04.1997**
(21) Anmeldenummer: 95101281.4
(22) Anmeldetag: 31.01.1995
(51) Int. Cl.: B60R 22/46

(54) **Gurtstraffer für einen Sicherheitsgurt**
Belt pretensioner for a safety belt
Tendeur de ceinture de sécurité

(30) Priorität: 11.02.1994 DE 4404462
(43) Veröffentlichungstag der Anmeldung: 06.09.1995
(73) Patentinhaber: TRW Occupant Restraint Systems GmbH, 73553 Alfdorf (DE)
(72) Erfinder: Bühr, Erwin, D-73527 Schwäbisch Gmünd (DE); Petzi, Jürgen, D-73312 Geislingen-Eybach (DE); Holzapfel, Volker, D-66606 St. Wendel (DE); Böhmler, Klaus, D-73525 Schwäbisch Gmünd (DE)
(74) Vertreter: Degwert, Hartmut, Dipl.-Phys.

(56) Entgegenhaltungen:
- EP-A- 0 093 237
- EP-A- 0 629 531
- DE-A- 2 349 891
- DE-C- 4 234 276
- DE-U- 9 308 273

## Beschreibung

Gurtstraffer für einen Sicherheitsgurt, mit einem durch einen Zünder auslösbaren, eine Antriebseinrichtung für eine Gurtstraffvorrichtung beaufschlagenden pyrotechnischen Treibsatz, wobei die Antriebseinrichtung eine Kolben-Zylinder-Einheit mit einem translatorisch verfahrbaren Kolben aufweist und wobei der pyrotechnische Treibsatz im Bereich eines von der Kolben-Zylinder-Einheit umschlossenen Zylinderraums angeordnet ist.

Ein solcher Gurtstraffer ist aus der EP-A-0 093 237 bekannt. Bei dem in diesem Dokument offenbarten Gurtstraffer ist innerhalb des Treibsatzes ein Zünder angeordnet, mit dem im Bedarfsfall der Treibsatz gezündet werden kann, um einen Straffvorgang für einen Sicherheitsgurt auszulösen. Nachteilig bei dieser Anordnung ist, daß besondere Maßnahmen getroffen werden müssen, um ein unbeabsichtigtes Zünden des an sich einsatzbereiten Zünders zu verhindern, insbesondere während des Transportes und der Montage des Gurtstraffers.

Der Erfindung liegt die Aufgabe zugrunde, einen Gurtstraffer der eingangs angegebenen Art zu schaffen, der bei der Herstellung und Montage einfach und sicher zu handhaben ist.

Zur Lösung dieser Aufgabe wird erfindungsgemäß vorgeschlagen, daß der Zünder als eigenständige Einheit ausgebildet sowie vom Treibsatz getrennt angeordnet ist und daß der Treibsatz innerhalb eines Treibsatzaufnahmeraums vorgesehen ist, der an einer dem Zünder zugewandten Seite von einer Trennwand verschlossen ist. Durch die Trennung des Zünders vom Treibsatz wird eine größere Sicherheit beim Transport, bei der Lagerung und bei der Montage der Bauteile des Gurtstraffers erzielt, da der Zünder zuletzt nach Fertigstellung des Gurtstraffers eingebaut werden kann. Die Trennwand gewährleistet, daß der Treibsatz an seinem gewünschten Ort gehalten wird, während der Zünder dennoch den Treibsatz durch die Trennwand hindurch zünden kann.

Ein besonders einfacher und kompakter Aufbau des Gurtstraffers wird erzielt, wenn der Treibsatzaufnahmeraum innerhalb des Kolbens ausgebildet ist und die Trennwand zumindest einen Teilabschnitt des dem Zylinderraum zugewandten Kolbenbodens bildet. Diese Anordnung ist insbesondere dann vorteilhaft, wenn die Antriebseinrichtung eine mit dem Kolben verbundene Zahnstange aufweist, die sich axial vom Zylinderraum weg erstreckt. Bei dieser Ausführungsform wird der mit der Zahnstange verbundene und bevorzugt mit ihr integral ausgebildete Kolben gleichzeitig als Aufnahme für den Treibsatz genutzt, so daß ein zusätzlicher Treibmittelbehälter entfallen kann. Außerdem kann auf diese Weise beim Abbrennen des Treibsatzes der auf den Kolben wirkende Rückstoß zusätzlich zum Antrieb genutzt werden.

In einer anderen Ausführungsform ist der Treibsatzaufnahmeraum in einem Treibmittelbehälter vorgesehen, welcher innerhalb des Zylinderraums angeordnet ist. Diese Ausführungsform gestattet es, den Treibmittelbehälter mit dem Treibsatz, aber ohne Zünder, vorzufertigen, so daß der vorgefertigte Treibmittelbehälter bei der Montage des Gurtstraffers lediglich noch in den Zylinderraum eingesetzt werden muß. Der Treibmittelbehälter ist bei dieser Ausführungsform bevorzugterweise an der dem Kolben gegenübergelegenen Stirnwand des Zylinders angeordnet, zum Zylinderraum hin mit einem Deckel verschlossenen und besitzt eine dem Zünder zugewandte Berstmembran. Diese Anordnung gestattet es, den Zünder an einer Seite des Treibmittelbehälters anzuordnen, die von der mit dem Deckel verschlossenen Austrittsöffnung für die Treibgase verschieden ist.

Ist der Treibmittelbehälter mit zumindest einem sich in Axialrichtung des Zylinders erstreckenden Vorsprung versehen, so kann dieser Vorsprung für eine Volumenverringerung des Zylinderraums sorgen, wodurch eine stufenartige Charakteristik der Kolben-Zylinder-Einheit geschaffen wird, die zu einer stufenartig verlaufenden Expansions-Charakteristik der Kolben-Zylinder-Einheit führt.

Bevorzugt bildet dabei das freie Ende des Vorsprungs einen Anschlag für den Kolben, wodurch der Zylinderraum ein definiertes Totvolumen erhält, wenn der Kolben am Anschlag anliegt, und der Kolben zu Beginn seiner Bewegung eine verminderte druckbeaufschlagte Stirnfläche aufweist.

Weist die Antriebseinrichtung ein mit dem Kolben verbundenes Zugelement, insbesondere ein Seil auf, welches sich axial durch den Zylinderraum erstreckt und durch die Stirnwand des Zylinders abgedichtet austritt, und ist der Vorsprung als ein das Zugelement umgebendes rohrförmiges Teil ausgebildet, so dient der Vorsprung als Schutz für das Zugelement, beispielsweise das Seil, während des Abbrennvorgangs des Treibsatzes. Dabei kann der das Zugelement rohrförmig umgebende Vorsprung gleichzeitig auch als Dichtung für das Zugelement dienen.

In einer weiteren Ausführungsform ist der Zünder im Bereich der dem Kolbenboden gegenübergelegenen Stirnwand des Zylinders vorgesehen.

Ist in der Stirnwand des Zylinders ein Zünderaufnahmeraum vorgesehen, der über einen Zündkanal mit dem Zylinderraum verbunden ist, so kann die Zündflamme einerseits durch die Orientierung des Zündkanals in einer gewünschten Weise auf den Treibsatz gerichtet werden, und andererseits kann der Zünder einfach montiert werden, insbesondere dann, wenn der Zünderaufnahmeraum von außen zugänglich ist.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine teilweise geschnittene Seitenansicht einer ersten Ausführungsform der Erfindung,
Fig. 2 eine geschnittene Teilansicht einer Abwandlung der Ausführungsform nach Fig. 1,
Fig. 3 eine geschnittene Teilansicht einer zweiten Ausführungsform der Erfindung und
Fig. 3a eine Variante der Ausführung nach Fig. 3

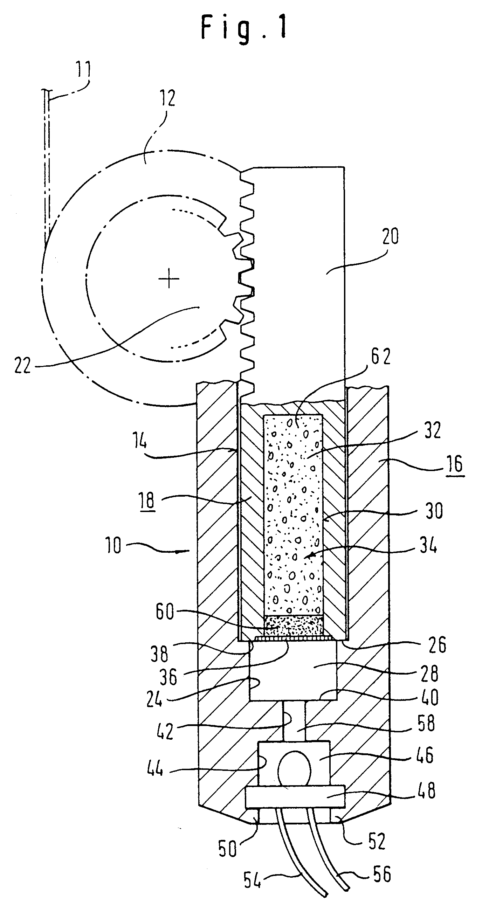

In Fig. 1 ist ein Gurtstraffer für einen nur schematisch gezeigten Sicherheitsgurt 11 mit Gurtaufroller 12 dargestellt. Der Gurtstraffer weist ein Gehäuse 10 auf, das an den Gurtaufroller 12 angeschlossen ist.

Das Gehäuse 10 besitzt eine abgestufte Axialbohrung mit einem ersten Bohrungsabschnitt 14 größeren Durchmessers. Der Bohrungsabschnitt 14 bildet im Gehäuse 10 einen Zylinder 16 einer Kolben-Zylinder-Einheit. Innerhalb der Bohrung 14 ist ein Kolben 18 axial verschiebbar aufgenommen. Der Kolben 18 geht an seinem aus dem Zylinder 16 und damit aus dem Gehäuse 10 austretenden Ende in eine Zahnstange 20 über. Die Zahnstange 20 steht im Eingriff mit einem angepaßten Ritzel 22 der Gurtstraffvorrichtung, welches über einen Kupplungsmechanismus an die Gurtspule des Gurtaufrollers 12 ankoppelbar ist.

Der erste Bohrungsabschnitt 14 geht an seinem inneren, von der Öffnung abgewandten Ende in einen zweiten Bohrungsabschnitt 24 unter Ausbildung einer im wesentlichen radialen Ringfläche 26 über. Die Ringfläche 26 bildet einen Anschlag für den Kolben 18, so daß der Zylinder 16 und der Kolben 18 im Bereich des zweiten Bohrungsabschnitts 24 einen Zylinderraum 28 bestimmen. Der Zylinderraum 28 besitzt ein von der Axialerstreckung und vom Durchmesser des zweiten Bohrungsabschnitts abhängiges Volumen.

Der Kolben 18 ist mit einer Axialbohrung 30 versehen, die einen Treibsatzaufnahmeraum 32 für einen Treibsatz 34 bildet.

Die als Sacklochbohrung ausgebildete Axialbohrung 30 mündet in den Zylinderraum 28. Im Bereich ihrer Mündung ist die Axialbohrung 30 mittels eines eine Trennwand 36 zwischen dem Treibsatz 34 und dem Zylinderraum 28 bildenden Deckels, der einen Teil des dem Zylinderraum 28 zugewandten Kolbenbodens 38 bildet, verschlossen.

In der dem Kolbenboden 38 gegenübergelegenen Stirnwand 40 des Zylinders 16 ist ein dritter Bohrungsabschnitt 42 der Axialbohrung mit geringem Durchmesser vorgesehen, der an seinem vom Zylinderraum 28 abgewandten Ende in einen vierten Bohrungsabschnitt 44 mit vergrößertem Durchmesser übergeht. Der vierte Bohrungsabschnitt mündet am anderen axialen Ende des Gehäuses 10 und bildet dort einen Zünderaufnahmeraum 46. In den Zünderaufnahmeraum 46 ist ein Zünder 48 mittels einer Preßpassung eingesetzt. Der Zünder 48 wird zusätzlich durch zwei Nasen 50, 52 arretiert, welche durch Umbiegen eines Teils des Mündungsrandes des vierten Bohrungsabschnitts 44 den Zünder 48 zusätzlich festklemmen. Der Zünder 48 ist mit zwei Kabeln 54, 56 mit einer von einer Auslösesteuerung beaufschlagten Spannungsquelle verbunden.

Wird der Zünder 48 durch Anlegen eines Zündimpulses an die Kabel 54 und 56 gezündet, so entsteht im Zünderaufnahmeraum 46 eine Flamme, die durch den einen Zündkanal 58 bildenden dritten Bohrungsabschnitt 42 in den Zylinderraum 28 dringt und dort auf die als Berstmembran ausgebildete Trennwand 36 auftrifft und diese zerstört. Danach entzündet die Flamme eine unmittelbar hinter der Trennwand 36 innerhalb der Axialbohrung 30 des Kolbens 18 gelegene erste Treibsatzstufe 60, den sogenannten Booster. Dieser Booster sorgt anschließend für eine explosionsartige Zündung des eine zweite Treibsatzstufe bildenden Treibmittels 62. Die bei der Verbrennung des Treibsatzes 34 entstehenden Verbrennungsgase dringen durch die zerstörte Trennwand 36 in den Zylinderraum 28 ein und erzeugen dort einen hohen Gasdruck, der auf der einen Seite von dem mit der Preßpassung festsitzenden und zusätzlich von den Nasen 50, 52 arretierten Zünder 48 abgestützt wird. Dieser Gasdruck sorgt dafür, daß sich der Kolben 18 unter hoher Beschleunigung innerhalb des ersten Bohrungsabschnitts 14 in Richtung der Mündung des ersten Bohrungsabschnitts 14 verschiebt. Dabei versetzt die Zahnstange 20 das Ritzel 22 in Drehung. Diese Drehung wird durch den Kupplungsmechanismus in Aufwickelrichtung auf die Gurtspule des Gurtaufrollers 12 übertragen, wodurch die Straffung des Sicherheitsgurtes 11 erfolgt.

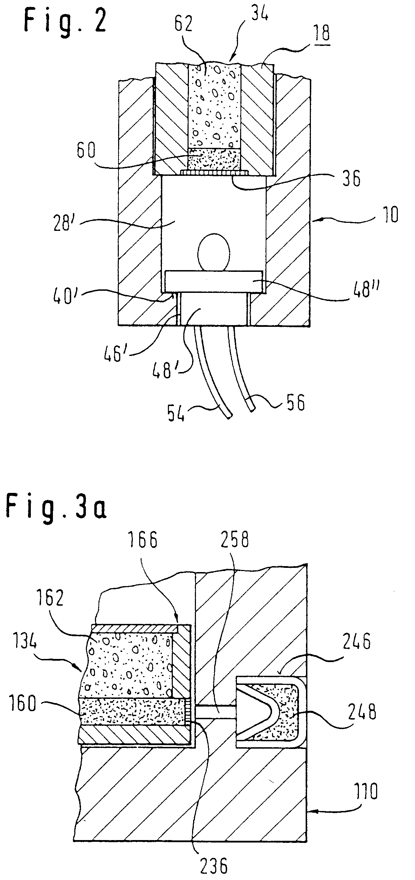

Während der Zünder bei der Ausführungsform in Fig. 1 von außen in den vierten Bohrungsabschnitt 44 der Axialbohrung des Gehäuses 10 eingesetzt und anschließend durch das Umbiegen der Nasen 50 und 52 gesichert wird, ist in der in Fig. 2 dargestellten Abwandlung der Ausführungsform nach Fig. 1 der Zünder 48' von innen, d.h. von der Seite des Zylinderraums 28' in den Zünderaufnahmeraum 46' eingesetzt. Der Zylinderraum 28' geht hierbei unmittelbar, d.h. ohne Ausbildung eines Zündkanals in den Zünderaufnahmeraum über. Der Zünder 48' ist mit einem radial vorstehenden Umfangsbund 48'' versehen, welcher sich an der Stirnwand 40' des Zylinderraums 28' abstützt.

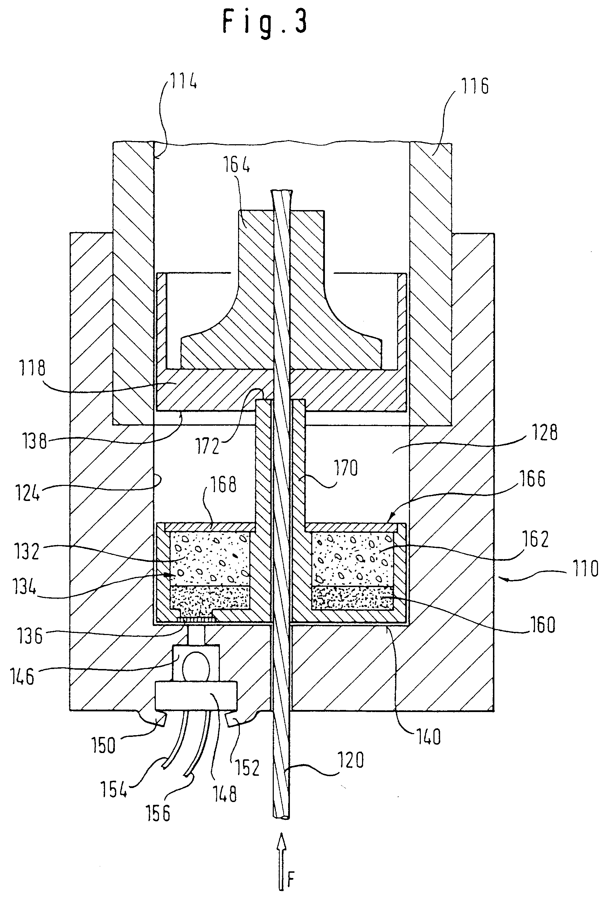

Eine andere Ausführungsform der Erfindung ist in Fig. 3 dargestellt. Dort sind die zur ersten Ausführungsform analogen Elemente mit um den Wert 100 erhöhten Bezugszeichen bezeichnet. Der Zylinder 116 ist bei dieser Ausführung größtenteils von einem in das Gehäuse 110 axial eingesetzten Rohr gebildet. Der erste, den Kolben 118 führende Bohrungsabschnitt 114 ist dabei im Zylinder 116 vorgesehen und geht im wesentlichen mit gleichem Durchmesser in den zweiten, den Zylinderraum 128 begrenzenden Bohrungsabschnitt 124 über.

Die Antriebseinrichtung für die Gurtstraffvorrichtung ist hier in bekannter Weise von einem als Zugelement 120 wirkenden Seil gebildet, welches sich axial durch den Zylinderraum 128 erstreckt und durch die Stirnwand 140 des Gehäuses 110 abgedichtet austritt. Das Zugelement 120 durchdringt den Kolben 118 axial und ist an einem auf der vom Zylinderraum 128 abgewandten Rückseite des Kolbens 118 vorgesehenen Seilbefestigungselement 164 befestigt, welches seinerseits auf der Rückseite des Kolbens 118 anliegt und den vom Zugelement 120 ausgeübten Zug auf die Fläche des Kolbens 118 im wesentlichen gleichmäßig verteilt.

Innerhalb des Zylinderraums 128 ist koaxial ein Treibmittelbehälter 166 angeordnet, welcher das Zugelement 120 ringförmig umgibt und sich in Radialrichtung bis zu dem Innendurchmesser des den Zylinderraum 128 umschließenden zweiten Bohrungsabschnitts 124 erstreckt. Im Treibmittelbehälter 166 ist ein ringförmiger Treibsatzaufnahmeraum 132 ausgebildet, in welchem ein Booster 160 und ein Treibmittel 162 vorgesehen sind. An seiner zum Zylinderraum 128 weisenden ringförmigen Mündung ist der Treibsatzaufnahmeraum 132 von einem ringförmigen Deckel 168 verschlossen. In seinem inneren, das Zugelement 120 umschließenden Bereich ist der Treibmittelbehälter 166 mit einem das Zugelement 120 umgebenden ringförmigen Vorsprung 170 umgeben, der an seinem freien Ende einen Anschlag 172 für den Kolben 118 bildet. Der ringförmige Vorsprung 170 sorgt auf diese Weise für den zur Bildung des Zylinderraums 128 erforderlichen Axialabstand zwischen dem Deckel 168 des Treibmittelbehälters 166 und dem Kolbenboden 138.

Gezündet wird der Treibsatz 134 von einem in ähnlicher Weise wie im ersten Ausführungsbeispiel angeordneten Zünder 148, der jedoch in einem von einer bezüglich der Zylinderachse exzentrisch gelegenen Stufenbohrung gebildeten Zünderaufnahmeraum 146 angeordnet ist, welcher über einen Zündkanal 158 mit dem Zylinderraum 128 in Verbindung steht. Im Bereich der Mündung des Zündkanals 158 in den Zylinderraum 128 ist der an der Stirnwand 140 anliegende Treibmittelbehälter 166 mit einer Berstmembran 136 versehen, welche vom Zünder 148 aufgeschossen wird, wobei die Zündflamme den Booster 160 und anschließend das Treibmittel 162 entzündet. Der sich beim Entzünden des aus dem Booster 160 und dem Treibmittel 162 bestehenden Treibsatzes entwickelnde Druck innerhalb des Treibsatzaufnahmeraums 132 sprengt den ringförmigen Deckel 168 aus der Mündung des Treibsatzaufnahmeraums 132 fort, so daß die beim Verbrennen des Treibsatzes 134 entstehenden Gase in den Zylinderraum 128 entweichen können und dort für eine Axialverschiebung des Kolbens 118 in gleicher Weise sorgen, wie dies in der ersten Ausführungsform geschieht. In der Ausführungsform nach Fig. 3 zieht der Kolben 118 jedoch das Zugelement 120 in den Zylinderraum 128 hinein, und der auf das Seil in Richtung des Pfeiles F ausgeübte Zug wird unmittelbar oder über eine an die Gurtspule des Gurtaufrollers ankoppelbare Seilscheibe zum Straffen des Sicherheitsgurtes wirksam.

Auf der rechten Seite des Gehäuses 110 in der Ausführungsform der Fig. 3a ist eine alternative Anordnung eines Zünders 248 gezeigt, der als mechanischer Schlagzünder ausgeschaltet ist. Der Zünder 248 ist in einer Radialbohrung im Gehäuse 110 mit Preßsitz befestigt. Die den Zünderaufnahmeraum 246 bildende Radialbohrung steht über einen ebenfalls radial bezüglich der Kolben-Zylinder-Anordnung verlaufenden Zündkanal 258 mit dem Zylinderraum 128 in Verbindung. Der Mündung des Zündkanals 258 in den Zylinderraum 128 unmittelbar benachbart gelegen ist eine in der Umfangswand des Treibmittelbehälters 166 vorgesehene Berstmembran 236, die als Trennwand zwischen dem Treibsatz 134 und der Umgebung des Treibmittelbehälters 166 ausgebildet ist.

Ein von einer bekannten Schlagvorrichtung auf den Zünder 248 ausgeübter mechanischer Schlag führt zur Zündung des Zünders 248. Die von diesem ausgehende Zündflamme tritt durch den Zündkanal 258 hindurch, schießt die Berstmembran 236 auf und entzündet den Treibsatz 134. Die nachfolgenden Reaktionen entsprechen denen, die beim eingangs geschilderten Zünden des Elektrozünders 148 auftreten.

Der das Zugelement 120 umgebende ringförmige Vorsprung 170 des Treibmittelbehälters 166 dient nicht nur als Distanzhalter für den Kolben 118, sondern schützt beim Abbrennen des Treibmittels auch das Zugelement 120 vor der auftretenden Hitzeentwicklung. Durch geeignete Wahl der Radialerstreckung des Vorsprungs 170 kann darüber hinaus die Wirkung eines Stufenkolbens erreicht werden, da beim Abheben des Kolbens 118 vom Anschlag 172 des Vorsprungs 170 ein sprunghafter Anstieg des innerhalb des Zylinders gebildeten Volumens stattfindet. Außerdem kann der Vorsprung 170 - zumindest für den Anfangszeitraum der Druckentwicklung innerhalb des Zylinderraums 128 - den Seildurchgang durch die Stirnwand 140 abdichten, zumindest bis sich der Kolben um einen vorgegebenen Betrag (der Betrag, um den der Vorsprung 170 axial in den Kolben 118 eindringt) verschoben hat.

Der Treibsatz 134 kann anstatt aus dem Booster 160 und dem Treibmittel 162 auch aus zwei Treibmitteln mit unterschiedlicher Abbrandgeschwindigkeit bestehen. Der Treibmittelbehälter 166 kann entweder aus Kunststoff oder aus einem Leichtmetall, wie beispielsweise Aluminium bestehen.

Die Anbringung des Zünders erfolgt in den Fig. 1, 3 und 3a gezeigten Ausführungsformen als einer der letzten Schritte nach der Montage des Gurtstraffers, wobei der Zünder von außen eingesetzt wird. Der Zünder kann aber auch, wie dies in der Variante der Fig. 2 dargestellt ist, vor dem Einbau des Treibmittelbehälters erfolgen. Dadurch kann das Sichern des Zünders entfallen.

## Patentansprüche

1. Gurtstraffer für einen Sicherheitsgurt, mit einem durch einen Zünder auslösbaren, eine Antriebseinrichtung für eine Gurtstraffvorrichtung beaufschlagenden pyrotechnischen Treibsatz (34), wobei die Antriebseinrichtung eine Kolben-Zylinder-Einheit mit einem translatorisch verfahrbaren Kolben (18; 118) aufweist und wobei der pyrotechnische Treibsatz (34) im Bereich eines von der Kolben-Zylinder-Einheit umschlossenen Zylinderraums (28) angeordnet ist, dadurch gekennzeichnet, daß der Zünder (48) als eigenständige Einheit ausgebildet sowie vom Treibsatz (34) getrennt am Zylinder angeordnet ist und daß der Treibsatz (34) innerhalb eines Treibsatzaufnahmeraums (32) vorgesehen ist, der an einer dem Zünder (48) zugewandten Seite von einer Trennwand (36) verschlossen ist.

2. Gurtstraffer nach Anspruch 1, dadurch gekennzeichnet, daß die Trennwand (36) von einer Berstmembran gebildet ist.

3. Gurtstraffer nach Anspruch 1 oder 2, dadurch gekennzeichnet, daß der Treibsatzaufnahmeraum (32) innerhalb des Kolbens (18) ausgebildet ist und daß die Trennwand (36) zumindest einen Teilabschnitt eines dem Zylinderraum (28) zugewandten Kolbenbodens (38) bildet.

4. Gurtstraffer nach Anspruch 1 oder 2, dadurch gekennzeichnet, daß der Treibsatzaufnahmeraum (132) in einem Treibmittelbehälter (166) vorgesehen ist, welcher innerhalb des Zylinderraums (128) angeordnet ist.

5. Gurtstraffer nach Anspruch 4, dadurch gekennzeichnet, daß der Treibmittelbehälter (166) an der dem Kolben (118) gegenübergelegenen Stirnwand (140) des Zylinderraums (128) angeordnet ist, daß der Treibmittelbehälter (166) zum Zylinderraum (128) hin mit einem Deckel (164) verschlossen ist und daß der Treibmittelbehälter (166) eine dem Zünder (148) zugewandte Berstmembran (136) besitzt.

6. Gurtstraffer nach Anspruch 4 oder 5, dadurch gekennzeichnet, daß der Treibmittelbehälter (166) mit zumindest einem sich in Axialrichtung des Zylinderraums (128) erstreckenden Vorsprung (170) versehen ist.

7. Gurtstraffer nach Anspruch 6, dadurch gekennzeichnet, daß das freie Ende des Vorsprungs (170) einen Anschlag (172) für den Kolben (118) bildet.

8. Gurtstraffer nach einem der vorhergehenden Ansprüche, dadurch gekennzeichnet, daß die Antriebseinrichtung eine mit dem Kolben (18) verbundene Zahnstange (20) aufweist, die sich axial vom Zylinderraum (28) weg erstreckt.

9. Gurtstraffer nach einem der vorstehenden Ansprüche, dadurch gekennzeichnet, daß die Antriebseinrichtung ein mit dem Kolben (118) verbundenes Zugelement (120), insbesondere ein Seil, aufweist, das sich axial durch den Zylinderraum (128) erstreckt, und daß der Treibsatz (134) ringförmig ausgebildet ist und das Zugelement (120) umgibt.

10. Gurtstraffer nach einem der vorhergehenden Ansprüche, dadurch gekennzeichnet, daß der Zünder (48, 148) im Bereich der dem Kolbenboden (38, 138) gegenübergelegenen Stirnwand (40, 140) des Zylinderraums (28, 128) vorgesehen ist.

11. Gurtstraffer nach Anspruch 10, dadurch gekennzeichnet, daß in der Wand des Zylinders (16, 116), insbesondere in der Stirnwand (40, 140), ein Zünderaufnahmeraum (46, 146, 246) vorgesehen ist, der über einen Zündkanal (58, 158, 258) mit dem Zylinderraum (28, 128) verbunden ist.

## Claims

1. A belt pretensioner for a safety belt comprising a pyrotechnic propellant charge (34) adapted to be fired by an igniter and to operate a drive device for a belt pretensioner device, the drive device including a piston and cylinder unit with a piston (18; 118) to be moved in translation, and the pyrotechnic propellant charge (34) being arranged within the extent of a cylinder space (28) enclosed by the piston and cylinder unit, characterized in that the igniter (48) is arranged as a self-contained unit and is arranged on the cylinder separately from the propellant charge (34), and in that the propellant charge (34) is provided within a propellant charge accommodating space (32), which is shut off by a partition wall (36) at a side which is facing to the igniter (48).

2. The belt pretensioner as claimed in claim 1,
characterized in that the partition wall (36) is formed by a bursting plate.

3. The belt pretensioner as claimed in claim 1 or in claim 2, characterized in that the propellant charge accommodating space (32) is formed within the piston (18) and in that the partition wall (36) constitutes at least a part of a piston head (38) facing the cylinder space (28).

4. The belt pretensioner as claimed in claim 1 or in claim 2, characterized in that the propellant charge accommodating space (132) is provided in a propellant charge container (166), which is arranged in the interior of the cylinder space (128).

5. The belt pretensioner as claimed in claim 4,
characterized in that the propellant charge container (166) is arranged on the end wall (140), opposite to the piston (118), of the cylinder space (128), in that the propellant charge container (166) is shut off by a cover (164) from the cylinder space (128) and in that the propellant charge container (166) possesses a bursting plate (136) facing the igniter (148).

6. The belt pretensioner as claimed in claim 4 or in claim 5, characterized in that the propellant charge container (166) is provided with at least one projection (170) extending in the axial direction of the cylinder space (128).

7. The belt pretensioner as claimed in claim 6,
characterized in that the free end of the projection (170) constitutes an abutment (172) for the piston (118).

8. The belt pretensioner as claimed in any one of the preceding claims, characterized in that the drive device possesses a rack (20) connected with the piston (18) and extending away from the cylinder space (28) in an axial direction.

9. The belt pretensioner as claimed in any one of the preceding claims, characterized in that the drive device comprises a traction element (120) connected with the piston (118), more particularly in the form of a cable, and which extends axially through the cylinder space (128), and in that the propellant charge (134) is annular in design and surrounds the traction element (120).

10. The belt pretensioner as claimed in any one of the preceding claims, characterized in that the igniter (48, 148) is provided adjacent to the end wall (40, 140), opposite to the piston head (38, 138), of the cylinder space (28, 128).

11. The belt pretensioner as claimed in claim 10,
characterized in that an igniter accommodating space (46, 146, 246) is provided in the wall of the cylinder (16, 116) and more particularly in the end wall (40, 140), such space (46, 146, 246) being connected via a firing channel (58, 158, 258) with the cylinder space (28, 128).

## Revendications

1. Raidisseur de ceinture pour une ceinture de sécurité, avec un bloc de propulsion (34) pouvant être déclenché par un allumeur, ledit bloc de propulsion pyrotechnique actionnant un système d'entraînement d'un dispositif raidisseur de ceinture, le système d'entraînement présentant un ensemble piston/cylindre avec un piston (18; 118) qui peut effectuer un mouvement de translation, et dans lequel le bloc de propulsion pyrotechnique (34) est disposé dans la zone d'une chambre cylindrique (28) entourée par l'ensemble piston/cylindre caractérisé en ce que l'allumeur (48) est constitué sous la forme d'une unité autonome et est disposé de façon séparée du bloc de propulsion (34) sur le cylindre et en ce que le bloc de propulsion (34) est prévu à l'intérieur d'une chambre (32) de réception du bloc de propulsion, qui est fermée sur un côté d'une paroi de séparation, tournée vers l'allumeur (48).

2. Raidisseur de ceinture selon la revendication 1, caractérisé en ce que la cloison de séparation (36) est constituée par une membrane de rupture.

3. Raidisseur de ceinture selon la revendication 1 ou 2, caractérisé en ce clue la chambre de réception (32) du bloc de propulsion est réalisée à l'intérieur du piston (18) et en ce que la cloison de séparation (36) constitue au moins une section partielle d'un fond (38) de piston, tourné vers la chambre cylindrique (28).

4. Raidisseur de ceinture selon la revendication 1 ou 2, caractérisé en ce que la chambre de réception (132) du bloc de propulsion est prévue dans un réservoir d'agent de propulsion (166), qui est disposé à l'intérieur de la chambre cylindrique (128).

5. Raidisseur de ceinture selon la revendication 4, caractérisé en ce que le réservoir de l'agent de propulsion (166) est disposé sur la paroi frontale (140) de la chambre cylindrique (128) située en regard du piston (118), en ce que le réservoir (166) de l'agent de propulsion est fermé en direction de la chambre cylindrique (128) par un couvercle (164) et en ce que le réservoir de l'agent de propulsion (166) possède une membrane de rupture (136), tournée vers l'allumeur (148).

6. Raidisseur de ceinture selon la revendication 4 ou 5, caractérisé en ce que le réservoir de l'agent de propulsion (166) est pourvu d'au moins une saillie (170) s'étendant dans le sens de l'axe de la chambre cylindrique (128).

7. Raidisseur de ceinture selon la revendication 6, caractérisé en ce que l'extrémité libre de la saillie (170) forme une butée (172) pour le piston (118).

8. Raidisseur de ceinture selon l'une quelconque des revendications précédentes, caractérisé en ce que le système d'entraînement présente une crémaillère (20) reliée au piston (18), qui s'étend axialement en s'écartant de la chambre cylindrique (28).

9. Raidisseur de ceinture selon l'une quelconque des revendications précédentes, caractérisé en ce que le système d'entraînement présente un élément de traction (120), relié au piston (118), en particulier un câble, qui s'étend axialement à travers la chambre cylindrique (128) et en ce que le bloc de propulsion (134) est doté d'une forme annulaire et entoure l'élément de traction (120).

10. Raidisseur de ceinture selon l'une quelconque des revendications précédentes, caractérisé en ce que l'allumeur (48, 148) est prévu dans la zone de la paroi frontale (40, 140) de la chambre cylindrique (28, 128), située en regard du fond du piston (38, 138).

11. Raidisseur de ceinture selon la revendication 10, caractérisé en ce que l'on prévoit dans la paroi du cylindre (16, 116), en particulier dans la paroi frontale (40, 140), une chambre de réception de l'allumeur (46, 146, 246) qui est reliée a la chambre cylindrique (28, 128) au moyen d'un canal d'allumage (58, 158, 258).
